# EUROPEAN PATENT APPLICATION

(11) **EP 4 648 211 A1**
(43) Date of publication of application: **12.11.2025**
(21) Application number: 25153144.8
(22) Date of filing: 21.01.2025
(51) Int. Cl.: H01M 50/55, H01M 50/553

(54) **INTEGRATED TERMINAL, SECONDARY BATTERY INCLUDING THE SAME, AND METHOD OF MANUFACTURING THE SAME**

(30) Priority: 09.05.2024 KR 20240061385
(71) Applicant: SAMSUNG SDI CO., LTD., Yongin-si, Gyeonggi-do 17084 (KR)
(72) Inventor: YOO, Seungyeol, 17084 Yongin-si (KR); KIM, Heonhee, 17084 Yongin-si (KR); CHOI, Jongnam, 17084 Yongin-si (KR)
(74) Representative: Marks & Clerk LLP

(57) **Abstract**

An integrated terminal includes: a terminal assembly including a terminal member configured to adjoin a sub-plate electrically connected to an electrode assembly of a secondary battery and a terminal insulator that surrounds a side of the terminal member; and a cap insulator extending along a through hole in a cap plate that is coupled to a case that accommodates the electrode assembly and in which the through hole into which the terminal assembly is inserted is formed. When the terminal assembly is inserted into the through hole, the terminal insulator and the cap insulator adjoin each other, and a reinforced material is inserted into at least one of the terminal insulator and the cap insulator.

## Description

### BACKGROUND

### 1. Field

Aspects of embodiments of the present disclosure relate to an integrated terminal, a secondary battery including the same, and a method of manufacturing the same.

### 2. Related Art

Different from primary batteries, which are not designed to be charged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage. A secondary battery generally includes an electrode assembly including (or consisting of) a positive electrode and a negative electrode, a case accommodating the electrode assembly, a terminal (e.g., an electrode terminal) connected to the electrode assembly, etc.

In the electrode terminal, a direct-coupled terminal is formed by welding a current collector and a terminal plate outside a cell by closely attaching the current collector and the terminal plate. In the direct-coupled terminal, an adhesive force between the current collector and the terminal plate is the most important factor in determining welding quality because a failure occurs in direct-coupled welding if the adhesion of the current collector and the terminal plate is not ensured or properly performed. However, in the direct-coupled terminal, it is difficult to determine whether or not the current collector and the terminal plate have been properly closely attached on the outside after the terminal plate is inserted because the terminal plate is installed to cover the current collector. Accordingly, the probability that a direct-coupled welding failure may occur is relatively high if the current collector is tilted or inclined during or as a result of a manufacturing process.

The above information disclosed in this Background section is for enhancement of understanding of the background of the present disclosure, and therefore, it may contain information that does not constitute related (or prior) art.

### SUMMARY

Embodiments of the present disclosure provide an integrated terminal that acts as a current collector and a terminal plate, a secondary battery including the same, and a method of manufacturing the same.

However, aspects and features of the present disclosure are not limited to the above-described aspects and features, and other aspects and features not mentioned herein, will be clearly understood by those skilled in the art from the description of the present disclosure below.

According to an embodiment of the present disclosure, an integrated terminal includes a terminal assembly including a terminal member configured to adjoin a sub-plate that is electrically connected to an electrode assembly of a secondary battery and a terminal insulator that surrounds a side of the terminal member, and a cap insulator extending along a through hole in a cap plate that is coupled to a case that accommodates the electrode assembly and in which the through hole into which the terminal assembly is inserted is formed. When the terminal assembly is inserted into the through hole, the terminal insulator and the cap insulator adjoin each other (e.g. the terminal assembly is inserted into the through hole such that the terminal insulator and the cap insulator adjoin each other). A reinforced material is inserted into at least one of the terminal insulator and the cap insulator.

In embodiments, when the reinforced material is inserted into the cap insulator, it may have a shape corresponding to a shape of the cap insulator.

In embodiments, when the reinforced material is inserted into the terminal insulator, it may have a shape corresponding to a shape of the terminal insulator.

In embodiments, the terminal member may have an empty space therein. The terminal insulator may surround the side of the terminal member while filling the empty space within the terminal member.

In embodiments, the empty space within the terminal member may have a mesh shape.

In embodiments, the terminal insulator and the cap insulator may be bonded together by thermal fusion or bonded together by an adhesive.

In embodiments, the cap insulator may be formed in the cap plate by insert-molding.

In embodiments, the terminal insulator may be formed in the terminal member by insert-molding.

According to another embodiment of the present disclosure, a secondary battery includes an electrode assembly, a case accommodating the electrode assembly, a terminal assembly including a terminal member adjoining a sub-plate that is electrically connected to the electrode assembly and a terminal insulator that surrounds a side of the terminal member, a cap plate coupled to the case and having a through hole into which the terminal assembly is inserted, and a cap insulator extending along the through hole. When the terminal assembly is inserted into the through hole, the terminal insulator and the cap insulator adjoin each other (e.g. the terminal assembly is inserted into the through hole such that the terminal insulator and the cap insulator adjoin each other). A reinforced material is inserted into at least one of the terminal insulator and the cap insulator.

In embodiments, when the reinforced material is inserted into the cap insulator, it may have a shape corresponding to a shape of the cap insulator.

In embodiments, when the reinforced material is inserted into the terminal insulator, it may have a shape corresponding to a shape of the terminal insulator.

In embodiments, the terminal member may have an empty space therein. The terminal insulator may surround the side of the terminal member while filling the empty space within the terminal member.

In embodiments, the empty space within the terminal member may have a mesh shape.

In embodiments, the terminal insulator and the cap insulator may be bonded together by thermal fusion or bonded together by an adhesive.

In embodiments, the terminal assembly may include a first terminal assembly and a second terminal assembly. The first terminal assembly and the second terminal assembly may be in the cap plate.

In embodiments, the terminal assembly may include a first terminal assembly and a second terminal assembly. The first terminal assembly may be in the cap plate, and the second terminal assembly may be in a cover plate opposite to the cap plate.

According to another embodiment of the present disclosure, a method of manufacturing a secondary battery includes manufacturing an electrode assembly, manufacturing a terminal assembly including a terminal member configured to adjoin a sub-plate that is electrically connected to the electrode assembly and a terminal insulator that surrounds a side of the terminal member, manufacturing a cap plate having a through hole into which the terminal assembly is inserted and which includes a cap insulator formed along the through hole, and inserting the terminal assembly into the through hole so that the terminal insulator and the cap insulator adjoin each other. The manufacturing of the terminal assembly or the manufacturing of the cap plate may include inserting a reinforced material into the respective terminal insulator or the cap insulator.

In embodiments, the manufacturing of the terminal assembly may include forming an empty space within the terminal member and forming the terminal insulator so that the terminal insulator surrounds the side of the terminal member while filling the empty space within the terminal member.

In embodiments, the forming of the empty space within the terminal member may include forming the empty space within the terminal member in a mesh shape.

In embodiments, the method of manufacturing a secondary battery may further include bonding the terminal insulator and the cap insulator by thermal fusion or by an adhesive.

At least some of the above and other features of the invention are set out in the claims.

According to embodiments of the present disclosure, the occurrence of a welding failure attributable to a reduction of the adhesive force in a conventional direct-coupled terminal can be reduced or prevented because the coupling part of the terminal insulator that surrounds the side of the terminal member and the cap insulator that is formed along the through hole of the cap plate is exposed to the outside.

According to embodiments of the present disclosure, a bonding process can be performed through a relatively easy and cheap method at a low temperature compared to inter-metal welding because inter-plastic welding between the terminal insulator and the cap insulator is used instead. Furthermore, a production cost for the secondary battery can be reduced because laser investment and equipment costs for inter-metal welding are reduced.

According to embodiments of the present disclosure, a failure attributable to the occurrence of an alien substance, which is problematic in inter-metal welding, can be solved because an inter-metal welding process that is used in a conventional direct-coupled terminal is omitted.

According to embodiments of the present disclosure, it is possible to increase cell performance with respect to crushing by increasing the strength of a bonding structure between the terminal insulator and the cap insulator because the reinforced material is inserted into one or more of the terminal insulator and the cap insulator.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure and provide a further understanding of the present disclosure along with the aforementioned contents of the disclosure. Accordingly, the present disclosure should not be construed as being limited to contents described in such drawings:
FIG. 1A is an upper perspective view of a prismatic secondary battery.
FIG. 1B is a cross-sectional view taken along the line I-I' in FIG. 1A.
FIG. 2 is a diagram illustrating a conventional direct-coupled terminal.
FIG. 3 is a perspective view of a secondary battery including an integrated terminal according to embodiments of the present disclosure.
FIG. 4 is a cross-sectional view of an integrated terminal according to embodiments of the present disclosure.
FIG. 5 is a cross-sectional view of a coupling process of the integrated terminal according to embodiments of the present disclosure.
FIG. 6 is a plan view of a cap plate before it is coupled to a case of the secondary battery including the integrated terminal according to embodiments of the present disclosure.
FIG. 7 is a plan view of a secondary battery including the integrated terminal according to embodiments of the present disclosure.
FIG. 8 is a diagram for describing steps of a method of manufacturing the secondary battery including the integrated terminal according to embodiments of the present disclosure.
FIG. 9 is a diagram of an embodiment in which a reinforced material is inserted into the cap insulator in the integrated terminal according to embodiments of the present disclosure.
FIG. 10 is a diagram of an embodiment in which the reinforced material is inserted into the terminal insulator in the integrated terminal according to embodiments of the present disclosure.
FIG. 11 is a diagram of another embodiment in which a reinforced material is inserted into the terminal insulator in the integrated terminal according to embodiments of the present disclosure.

### DETAILED DESCRIPTION

Embodiments of the present disclosure will be described below, in detail, with reference to the accompanying drawings. Prior to the description, it is noted that the terms or words used in this specification and claims should not be construed as being limited to their common or dictionary meanings but instead should be understood to have meanings and concepts in agreement with the spirit of the present disclosure based on the principle that an inventor can define the concept of each term suitably in order to describe his/her own invention in the best way possible. Accordingly, because the embodiments described in this specification and the configurations illustrated in the drawings are only some examples of the present disclosure and do not cover all the embodiments of the present disclosure, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

To facilitate understanding of the present disclosure, the accompanying drawings are not drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of about 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of exemplified embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of exemplified embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

Examples of secondary batteries include a coin type, a cylindrical type, a prismatic type, and a pouch type. The present disclosure is basically applicable to a prismatic secondary battery. Therefore, the prismatic secondary battery will first be briefly described prior to description of embodiments of the present disclosure.

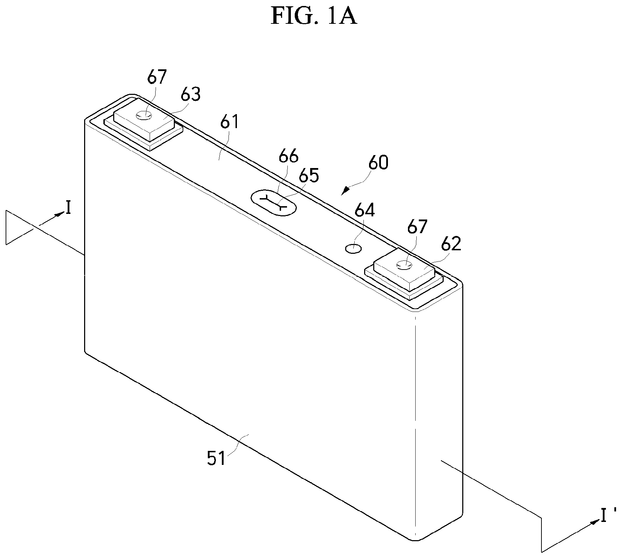

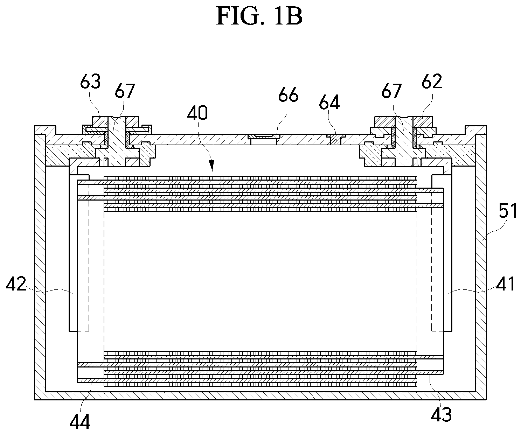

FIG. 1A is a top perspective view of the prismatic secondary battery. FIG. 1B is a cross-sectional view taken along the line I-I' in FIG. 1A.

First, the external appearance of the prismatic secondary battery illustrated in FIG. 1A will be described.

A casing (e.g., a case) 51 defines an overall appearance of the prismatic secondary battery and may be made of conductive metal, such as aluminium, aluminium alloy, or nickel-plated steel. In addition, the casing 51 may provide (or may form) a space for accommodating an electrode assembly therein.

A cap assembly 60 may include a cap plate 61 that covers an opening in the casing 51, and the cap assembly 60 and the cap plate 61 may be made of a conductive material. A first terminal 62 and a second terminal 63 may be electrically connected to respective positive and negative (or negative and positive) electrodes inside the casing 51 and may be installed to protrude outwardly through the cap plate 61.

The cap plate 61 may have an electrolyte injection port 64 formed to receive a sealing plug and a vent 66 having a notch 65. The vent 66 is designed for degassing the secondary battery, for example, for discharging excess gas generated inside the secondary battery.

With reference to FIG. 1B, the internal structure of the prismatic secondary battery and the coupling structure with the cap assembly 60 will be described.

As illustrated in FIG. 1B, the prismatic secondary battery may generally include an electrode assembly 40, a first current collector part 41, a first terminal 62, a second current collector part 42, a second terminal 63, and a cap assembly 60.

The electrode assembly 40 may be formed by winding or stacking a laminate of a first electrode plate, a separator, and a second electrode plate, each of which are in the form of a plate or a film. When the electrode assembly 40 is a wound laminate, it may have a winding axis that is parallel to the longitudinal direction of the casing. The electrode assembly 40 may be of a stack type rather than a winding type, but the shape of the electrode assembly 40 is not limited in the present disclosure. In addition, the electrode assembly 40 may be a Z-stack electrode assembly in which a first electrode plate and a second electrode plate are inserted into both sides of a separator that is then bent (or folded) into a Z-stack configuration. Furthermore, the electrode assembly 40 may include one or more electrode assemblies, which are stacked such that their long sides are adjacent to each other and accommodated in the casing, but the number of electrode assemblies is not limited in the present disclosure. The electrode assembly 40 may have a first electrode plate that acts as a negative electrode and a second electrode plate that acts as a positive electrode, or vice versa.

The first electrode plate may be formed by applying a first electrode active material, such as graphite or carbon, to a first electrode current collector plate made of metal foil, such as copper, copper alloy, nickel, or nickel alloy. The first electrode plate may have a first electrode tab (e.g., a first uncoated part) 43, which is a region without application of the first electrode active material. The first electrode tab 43 may act as a current flow passage between the first electrode plate and the first current collector part 41. In some embodiments, the first electrode tab 43 may be formed by cutting the first electrode plate to protrude to one side in advance when manufacturing the first electrode plate or may protrude further to one side than (e.g., may protrude beyond) the separator without separate cutting.

The second electrode plate may be formed by applying a second electrode active material, such as transition metal oxide, to a substrate made of metal foil, such as aluminium or aluminium alloy. The second electrode plate may have a second electrode tab (e.g., a second uncoated part) 44, which is a region without application of the second electrode active material. The second electrode tab 44 may act as a current flow passage between the second electrode plate and the second current collector part 42. In some embodiments, the second electrode tab 44 may be formed by cutting the second electrode plate to protrude to the other side in advance when manufacturing the second electrode plate or may protrude further to the other side than (e.g., may protrude beyond) the separator without separate cutting.

In some embodiments, the first electrode tab 43 may be located on the right end side of the electrode assembly 40, and the second electrode tab 44 may be located on the left end side of the electrode assembly 40. In other embodiments, the first electrode tab 43 and the second electrode tab 44 may be located on one end side of the electrode assembly 40 in the same direction. Here, the left and the right are referred to based on the secondary battery as oriented in FIG. 1 for convenience of explanation, but these terms may change in position when the secondary battery is rotated left and right or up and down.

The separator prevents a short circuit between the first electrode plate and the second electrode plate while permitting migration of lithium ions therebetween. The separator may be made of, for example, a polyethylene film, a polypropylene film, a polyethylene-polypropylene film, or the like.

The first electrode tab 43 of the first electrode plate and the second electrode tab 44 of the second electrode plate extend from both ends of the electrode assembly 40 as described above, respectively. In some embodiments, the electrode assembly 40 may be accommodated in the casing 51 together with an electrolyte.

In the electrode assembly 40, the first current collector part 41 and the second current collector part 42 may be welded and connected to the first electrode tab 43 extending from the first electrode plate and the second electrode tab 44 extending from the second electrode plate, respectively.

The first current collector part 41 and the second current collector part 42 are connected to the first terminal 62 and the second terminal 63, as described above with reference to FIG. 1A, through terminal pins 67, respectively. In some embodiments, the terminal pins 67 may each have an outer peripheral surface that is threaded and may be fastened to the first terminal 62 and the second terminal 63 by screwing. However, the present disclosure is not limited thereto. For example, the terminal pins 67 may also be coupled to the first terminal 62 and the second terminal 63 by riveting or welding.

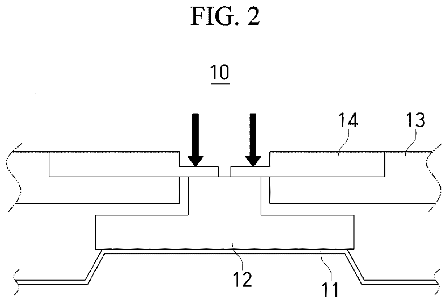

FIG. 2 is a diagram illustrating a conventional direct-coupled terminal.

Referring to FIG. 2, in the conventional direct-coupled terminal, a sub-plate 11 may be electrically connected to an electrode assembly. A current collector 12 may be disposed to adjoin the sub-plate 11 and be electrically connected to the sub-plate 11. The bottom of a terminal plate 14 included in a cap plate 13 may come into contact with the top of the current collector 12. Welding may be performed in the arrow direction in the state in which the terminal plate 14 and the current collector 12 come into contact with each other. In this case, for the electrode assembly to be electrically connected to the cap plate 13 properly via the sub-plate 11 and the current collector 12, the welding needs to be performed in the state in which the terminal plate 14 and the current collector 12 are closely attached. If a degree of adhesion is reduced, various welding failures, such as a crack, a pinhole, undercut, and an insufficient welding depth, may occur. In this case, there is a relatively high possibility that a cell failure, such as the occurrence of a leak or an increase in resistance, may occur because the sealing of a cell is broken. However, as illustrated in FIG. 2, in the conventional direct-coupled terminal, it is difficult to determine whether or not the adhesion of the current collector 12 and the terminal plate 14 has been well performed from the outside after the terminal plate 14 is inserted because the terminal plate 14 is installed to cover the current collector 12.

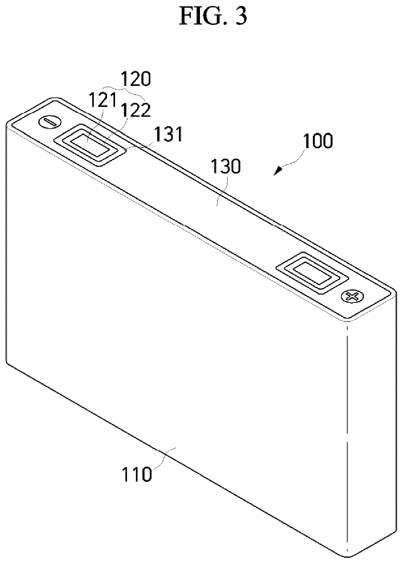

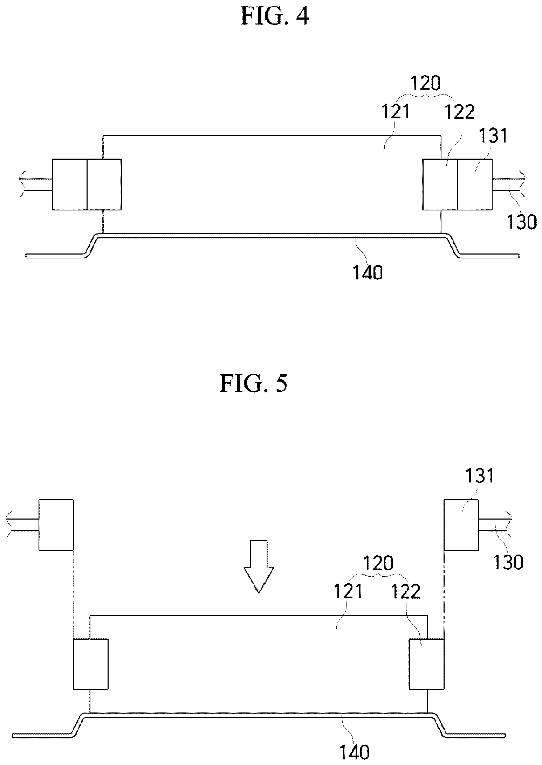

FIG. 3 is a perspective view of a secondary battery including an integrated terminal according to embodiments of the present disclosure. FIG. 4 is a cross-sectional view of the integrated terminal according to embodiments of the present disclosure.

Referring to FIGS. 3 and 4, the secondary battery 100, including the integrated terminal according to embodiments of the present disclosure, includes an electrode assembly, a case 110, an integrated terminal including a terminal assembly 120 and a cap insulator 131, and a cap plate 130.

The case 110 may be configured to accommodate the electrode assembly and/or an electrolyte, an opening part on one side of the case, and a closing part on the other side thereof, which is opposite to the open side. For example, the closing part may be opposite to the cap plate 130. The closing part may have a relatively closing structure compared to the opening part and may have a through hole, if desired.

For example, the case 110 may have a quadrangular column shape in which one of both sides of the case is sealed and the other side is opened. Furthermore, in FIG. 3, the case has a shape of a prismatic secondary battery, but the present disclosure is not limited thereto. The shape of the case may be different depending on the type of secondary battery.

The case 110 may be made of a material that is used in the industry to protect internal parts of the secondary battery against an external impact or a fire. For example, based on (or according to) the purpose and function of the secondary battery, the case may be a metal case including aluminium, an aluminium alloy, steel plated with nickel, or stainless steel, a plastic case including GFRP (glass fiber reinforced plastic), or a combination of them.

The terminal assembly 120 includes a terminal member 121 that is disposed to adjoin a sub-plate 140, which is electrically connected to the electrode assembly of the secondary battery 100, and a terminal insulator 122 that surrounds the side of (e.g., extends around a periphery of) the terminal member 121. The terminal member 121 may be electrically connected to the electrode assembly through the sub-plate 140.

In embodiments, the terminal assembly 120 may include a first terminal assembly and a second terminal assembly. The first terminal assembly may be electrically connected to a positive electrode of the electrode assembly. The second terminal assembly may be electrically connected to a negative electrode of the electrode assembly. In another embodiment, the first terminal assembly may be electrically connected to the negative electrode of the electrode assembly, and the second terminal assembly may be electrically connected to the positive electrode of the electrode assembly.

When the secondary battery according to embodiments of the present disclosure is a top terminal type secondary battery in which both a positive electrode terminal and a negative electrode terminal are disposed at the top of the secondary battery, the first terminal assembly and the second terminal assembly may be disposed in the cap plate 130. In another embodiment, when the secondary battery according to embodiments of the present disclosure is a side terminal type secondary battery in which the positive electrode terminal and the negative electrode terminal are disposed on both sides (e.g., opposite sides) of the secondary battery, the first terminal assembly may be disposed in the cap plate 130, and the second terminal assembly may be disposed in a cover plate that is opposite to the cap plate 130.

The sub-plate 140 is electrically connected to the electrode assembly. The sub-plate 140 may be coupled to at least one side of the electrode assembly and may be electrically connected to a first electrode plate (e.g., a positive electrode plate) or second electrode plate (e.g., negative electrode plate) of the electrode assembly. For example, the sub-plate 140 may be coupled to a first electrode tab of the electrode assembly. For example, the first electrode tab may be bonded to the sub-plate 140 by welding.

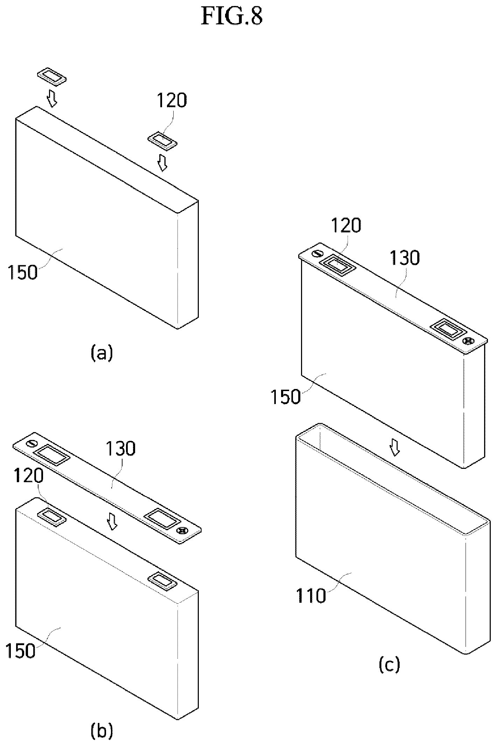

The cap plate 130 is coupled with (e.g. coupled to) the case 110. The cap plate 130 may have an approximately rectangular plate shape. The cap plate 130 may be made of the same material as the case 110. The cap plate 130 may have a size corresponding to the size of the inside of the opening part of the case 110. Furthermore, the cap plate 130 may be coupled to the case 110 by, for example, laser welding. An example of a process of coupling the cap plate 130 to the case 110 is described below, in detail, with reference to FIG. 8. An insulating member may be disposed between the cap plate 130 and the sub-plate 140 to prevent the cap plate 130 and the sub-plate 140 from being electrically connected to each other.

A through hole (e.g., an opening) and a groove for coupling with the terminal assembly 120, an infusion hole, and a vent hole for vent coupling may be formed in the cap plate 130. A vent may be coupled to the vent hole in the cap plate 130. The vent may be configured to discharge excess gas by rupturing when pressure within the secondary battery rises and may have a suitable vent structure. When the vent bursts, gas may be discharged because a gas flow is formed from the inside of the secondary battery to the outside thereof.

The through hole into which the terminal assembly 120 is inserted is formed in the cap plate 130. The cap plate 130 may include the cap insulator 131 that is formed along the through hole. The cap insulator 131 may be disposed along the circumference of the through hole of the cap plate 130.

In embodiments, when the terminal assembly 120 is inserted into the through hole of the cap plate 130, the terminal insulator 122 and the cap insulator 131 adjoin each other. For example, the cap insulator 131 and the terminal insulator 122 may be inserted between the cap plate 130 and the terminal member 121 so that the cap insulator 131 and the terminal insulator 122 are disposed to adjoin each other. The cap insulator 131 may be disposed on the part of the cap plate 130, and the terminal insulator 122 may be disposed on the part of the terminal member 121. Accordingly, the cap insulator 131 and the terminal insulator 122 can prevent the cap plate 130 and the terminal member 121 from being electrically connected to each other.

FIG. 5 is a cross-sectional view of the integrated terminal being coupled according to embodiments of the present disclosure.

FIG. 5 is a cross-sectional view of the terminal assembly 120 and the cap plate 130 before the integrated terminal is coupled viewed from the side. The sub-plate 140 may be coupled to at least one side of the electrode assembly and electrically connected to the electrode assembly. The terminal assembly 120 includes the terminal member 121 that is disposed to adjoin the sub-plate 140 and the terminal insulator 122 that surrounds the side of the terminal member 121.

FIG. 5 illustrates a form before the integrated terminal is coupled. In contrast, FIG. 4 illustrates a form after the integrated terminal is coupled. As the terminal assembly 120 including the terminal member 121 and the terminal insulator 122 is inserted into the through hole of the cap plate 130, the terminal insulator 122 may come into contact with the cap insulator 131. The terminal insulator 122 and the cap insulator 131 may be bonded in the state in which the terminal insulator 122 and the cap insulator 131 have come into contact with each other.

After the integrated terminal is coupled, a part of the terminal member 121 of the terminal assembly 120 may be exposed to the outside of the cap plate 130 through the through hole. According to an embodiment, the top of the terminal insulator 122 may be disposed below the top of the terminal member 121 so that the terminal member 121 itself may have a structure in which the terminal member 121 can easily operate as the external electrode of the secondary battery.

In embodiments, the terminal insulator 122 and the cap insulator 131 may be bonded together by thermal fusion. For example, a welding process by using laser or plasma may be performed to bond the terminal insulator 122 and the cap insulator 131. A crush process using a press may be used along with the welding process using laser or plasma.

Additionally or alternatively, according to embodiments, the terminal insulator 122 and the cap insulator 131 may be bonded together by an adhesive. The adhesive has electrical insulation characteristics and is safe for an environment within a battery. A material having excellent heat resistance may be used for the adhesive. For example, one of an epoxy adhesive, a silicon adhesive, a polyurethane adhesive, a polyamide adhesive, or a combination of them may be used as the adhesive. However, the adhesive, according to embodiments of the present disclosure, is not limited to the above materials and may include various adhesive substances having electrical insulation characteristics.

According to an embodiment, bonding between the terminal insulator 122 and the cap insulator 131 may be designed so that the bonding is maintained at more than vent critical pressure of the secondary battery. Accordingly, even after the terminal insulator 122 and the cap insulator 131 are bonded, the vent can properly operate with respect to thermal runaway or the generation of a gas within the secondary battery.

According to embodiments of the present disclosure, a coupling part of the terminal insulator that surrounds the side of the terminal member and the cap insulator that is formed along the through hole of the cap plate may be exposed to the outside and can prevent the occurrence of a welding failure attributable to a reduction of the adhesive force of a conventional direct-coupled terminal.

According to embodiments of the present disclosure, a bonding process can be performed through an easy and cheap method at a lower temperature compared to inter-metal welding because an inter-metal welding process that is used in a conventional direct-coupled terminal is omitted and inter-plastic welding between the terminal insulator and the cap insulator is used. Furthermore, a production cost for the secondary battery can be reduced because laser investment and equipment costs for inter-metal welding are reduced.

According to embodiments of the present disclosure, a failure attributable to the occurrence of an alien substance, which is problematic in inter-metal welding, can be solved because an inter-metal welding process that is used in a conventional direct-coupled terminal is omitted.

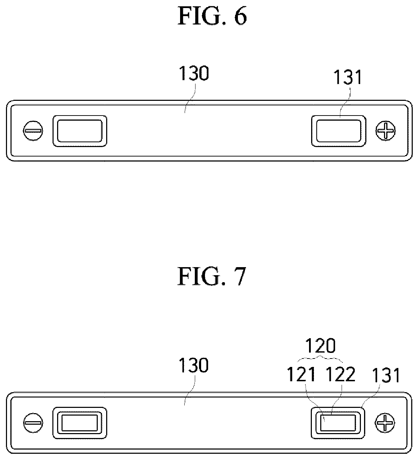

FIG. 6 is a plan view of a cap plate before it is coupled to a case of the secondary battery including the integrated terminal according to embodiments of the present disclosure. FIG. 7 is a plan view of the secondary battery including the integrated terminal according to embodiments of the present disclosure.

FIG. 6 shows a form of the cap plate 130 before the cap plate is coupled to the case of the secondary battery including the integrated terminal, which is viewed from the top. At least one through hole may be formed in the cap plate 130. The cap insulator 131 may be disposed along the circumference of the through hole. As illustrated in FIG. 6, the edge of the through hole may have a round quadrangular shape, but the present disclosure is not limited thereto. The edge of the through hole may be variously designed and changed depending on the type and use of a secondary battery. Furthermore, as illustrated in FIG. 6, the through hole is provided plural in number, but only one through hole may be formed in the cap plate 130 depending on the type and use of a secondary battery.

In embodiments, the cap insulator 131 may be an insulator that is disposed along the circumference of the through hole while maintaining a specific range from the edge of the through hole. For example, the cap insulator 131 may have a width from the edge of the through hole and may be disposed along the circumference of the through hole. A shape of the cap insulator 131 may be changed to correspond to that of the terminal assembly 120 that is inserted into the through hole.

The cap insulator 131 may be made of any one of polypropylene (PP), polyethylene (PE), polyvinyl chloride (PVC), urethane, nylon, and polytetrafluoroethylene (e.g., Teflon), that is, insulating materials. However, the material for the cap insulator 131, according to embodiments of the present disclosure, is not limited to the above materials and may include various substances having electrical insulation characteristics.

In embodiments, the cap insulator 131 may be formed in the cap plate 130 through insert-molding. In such an embodiment, the insert-molding may denote a molding process method of processing a raw material by injecting the raw material into a mold in the state in which an insert (e.g., an external element or an accessory) is disposed within the mold to improve the strength, functionality, and external appearance of a part.

For example, the cap insulator 131 may be formed through a process of injecting an insulating raw material that constitutes the cap insulator 131 while using, as an insert, the cap plate 130 made of a metal material in a molding corresponding to the through hole. The cap insulator 131 can be firmly fixed to the cap plate 130 and the strength and durability of the entire product can be improved, through such an insert-molding process. The entire productivity can be improved because a conventional assembly process including multiple steps can be omitted or simplified.

FIG. 7 illustrates the cap plate 130 after the cap plate is coupled to the case of the secondary battery including the integrated terminal, which is viewed from the top. The electrode assembly may be inserted into the case so that the terminal assembly 120 electrically connected to the electrode assembly is inserted into one or more through holes formed in the cap plate 130.

The terminal assembly 120 includes the terminal member 121 and the terminal insulator 122. The terminal insulator 122 may surround the side of the terminal member 121. As illustrated in FIG. 7, the edge of the terminal member 121 may have a round quadrangular shape, but the present disclosure is not limited thereto. The edge of the terminal member 121 may be variously designed and changed depending on the type and use of a secondary battery. Furthermore, as illustrated in FIG. 7, the terminal member 121 coupled to the cap plate 130 is provided plural in number, but may be one in number depending on the construction and type of a secondary battery.

In embodiments, the terminal insulator 122 may be disposed along the circumference of the terminal member 121 while maintaining a width within a range from the edge of the circumference of the side of the terminal member 121. For example, the terminal insulator 122 may have the same width from a boundary surface of the terminal member 121 and may be disposed along the circumference of the terminal member 121. A shape of the terminal insulator 122 may be changed to correspond to a shape of the cap insulator 131 that is disposed in the through hole.

The terminal insulator 122 may be made of any one of polypropylene (PP), polyethylene (PE), polyvinyl chloride (PVC), urethane, nylon, and polytetrafluoroethylene (e.g., Teflon), that is, insulating materials. However, the material for the terminal insulator 122 according to embodiments of the present disclosure is not limited to the above materials and may include various substances having electrical insulation characteristics.

According to an embodiment, the terminal insulator 122 may be formed in the terminal member 121 through insert-molding. For example, the terminal insulator 122 may be formed through a process of injecting an insulating raw material that constitutes the terminal insulator 122 while using, as an insert, the terminal member 121 made of a metal material in a molding corresponding to the through hole. The terminal insulator 122 can be firmly fixed to the terminal member 121 and the strength and durability of the entire product can be improved, through such an insert-molding process. The entire productivity can be improved because a conventional assembly process including multiple steps can be omitted or simplified.

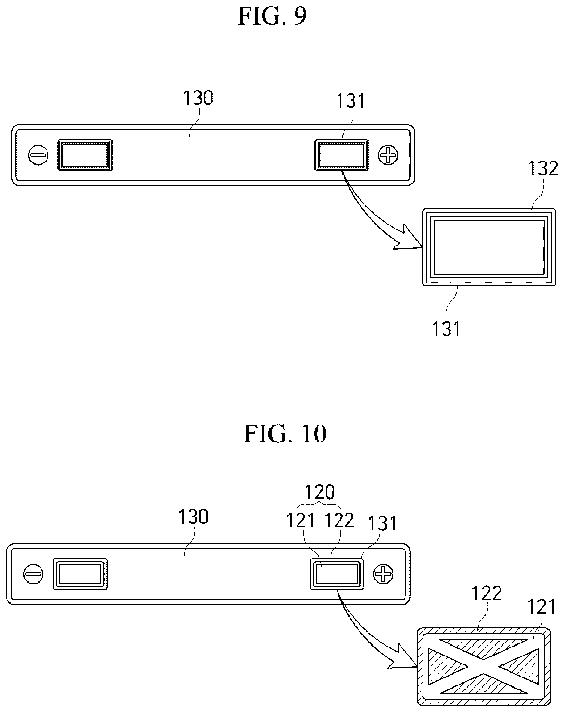

According to an embodiment, the cap insulator 131 may come into contact with the entire circumference of the terminal insulator 122. The cap insulator 131 may be bonded to the terminal insulator 122 in the state in which the cap insulator 131 has come into contact with the entire circumference of the terminal insulator 122 so that the through hole of the cap plate 130 can be sealed. A detailed method of bonding the cap insulator 131 to the terminal insulator 122 is described with reference to FIGS. 9 to 12.

FIG. 8 is a diagram for describing steps of a method of manufacturing the secondary battery including the integrated terminal according to embodiments of the present disclosure.

Referring to FIG. 8, in the method of manufacturing the secondary battery including the integrated terminal according to embodiments of the present disclosure, first, the electrode assembly may be manufactured. The terminal assembly including the terminal member and the terminal insulator that surrounds the side of the terminal member may be manufactured. The cap plate in which a through hole into which the terminal assembly is inserted is formed and which includes the cap insulator that is formed along the through hole may be manufactured.

Furthermore, as shown in step (a) of FIG. 8, the terminal assembly 120 may be coupled to the electrode assembly 150.

Next, as shown in step (b) of FIG. 8, the terminal assembly 120 coupled to the electrode assembly 150 may be inserted into the through hole formed in the cap plate 130 so that the terminal insulator and the cap insulator 131 adjoin each other. Thereafter, the cap insulator 131 that is disposed along the circumference of the through hole may be bonded to the terminal insulator of the terminal assembly 120.

Thereafter, as shown in step (c) of FIG. 8, the cap plate 130 may be coupled to the case 110 that accommodates the electrode assembly 150. In embodiments, the case 110 may have a quadrangular column shape in which one of both sides of the case is sealed and the other side is opened. Furthermore, in FIG. 8, the case 110 is shown as having a shape of a prismatic secondary battery, but the present disclosure is not limited thereto. The shape of the case may be different depending on the type of secondary battery. Accordingly, the opening part of the case has been illustrated as being the top of the case, but the present disclosure is not limited thereto. In contrast, the opening part of the case may be formed in any arbitrary side of the case 110.

The secondary battery that is manufactured by the manufacturing method according to embodiments of the present disclosure may be applied to vehicles, mobile phones and/or various types of electric devices.

In embodiments, in the integrated terminal according to embodiments of the present disclosure, a reinforced material is inserted into one or more of the terminal insulator 122 and the cap insulator 131, and embodiments thereof are described below with reference to FIGS. 9 to 11.

FIG. 9 is a diagram illustrating an embodiment in which the reinforced material is inserted into the cap insulator in the integrated terminal according to embodiments of the present disclosure.

Referring to FIG. 9, the integrated terminal according to embodiments of the present disclosure has a design in which the terminal and the current collector have been integrated. The terminal insulator 122 and the cap insulator 131 may be vulnerable to crushing because the terminal insulator 122 and the cap insulator 131 are each made of a plastic material through which a current does not flow.

Accordingly, in the integrated terminal according to embodiments of the present disclosure, the reinforced material is inserted into one or more of the terminal insulator 122 and the cap insulator 131. In embodiments, upon insert-molding for manufacturing the terminal insulator 122 or the cap insulator 131, the terminal insulator 122 or the cap insulator 131 may be manufactured by including the reinforced material of a metal material. In such an embodiment, the reinforced material may be an aluminium or iron material.

FIG. 9 illustrates an embodiment in which a reinforced material 132 is inserted into the cap insulator 131 in the integrated terminal. In embodiments, the reinforced material 132 inserted into the cap insulator 131 may have a shape corresponding to a shape of the cap insulator 131. For example, the edge of the reinforced material 132 may also have a round quadrangular shape because the edge of the cap insulator 131 has a round quadrangular shape.

Furthermore, in the integrated terminal, a reinforced material may be inserted into the terminal insulator 122. In embodiments, the reinforced material inserted into the terminal insulator 122 may have a shape corresponding to a shape of the terminal insulator 122. For example, the edge of the reinforced material may also have a round quadrangular shape because the edge of the terminal insulator 122 has a round quadrangular shape.

FIG. 10 is a diagram illustrating an embodiment in which the reinforced material is inserted into the terminal insulator in the integrated terminal according to embodiments of the present disclosure.

Referring to FIG. 10, the terminal member 121 may have an empty space therein. It is possible to reduce a manufacturing cost for the secondary battery, reduce the entire weight of the secondary battery, and increase the output of the secondary battery compared to the weight when the terminal member 121 has the empty space therein.

The empty space may have various shapes in a level at which the empty space does not influence or effect performance of the secondary battery, such as resistance and an output, durability that enables the empty space to operate as a terminal. A shape of the empty space may be a three-dimensional shape including polyhedrons, such as a regular hexahedron, a rectangular parallelepiped, a sphere, a cylinder, and a cone.

In such an embodiment, the terminal insulator 122 may surround the side of the terminal member 121 while filling the empty space within the terminal member 121. In embodiments, the terminal insulator 122 may be formed to surround the side of the terminal member 121 while filling the empty space within the terminal member 121 upon insert-molding. In such an embodiment, the empty space within the terminal member 121 may have one or more open spaces so that the material of the terminal member 121 can flow into the open spaces. As an embodiment, a cross-sectional view on the right side of FIG. 10 illustrates a form in which the terminal member 121 has an empty space having four triangle shapes therein and the terminal insulator 122 is formed to surround the side of the terminal member 121 while filling the four triangle shapes.

In this case, the terminal insulator 122 may fill the empty spaces of the terminal member 121. The terminal member 121 may act as a reinforced material because the terminal member 121 is made of a metal material. Accordingly, the strength of the terminal assembly 120 itself can be secured and the strength of the integrated terminal can also be secured because coupling between the terminal member 121 and the terminal insulator 122 is reinforced.

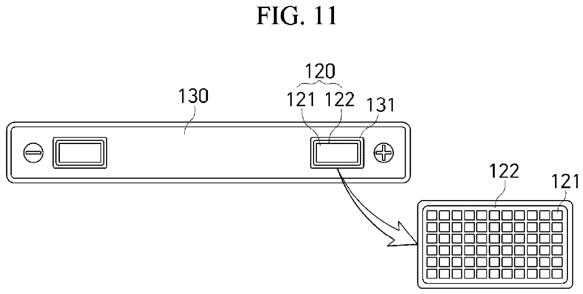

FIG. 11 is a diagram illustrating another embodiment in which a reinforced material is inserted into the terminal insulator in the integrated terminal according to embodiments of the present disclosure.

FIG. 11 illustrates an example in which an empty space within the terminal member 121 has a mesh shape. A cross-sectional view on the right side of FIG. 11 illustrates a form in which the terminal member 121 has the empty space having the mesh shape therein and the terminal insulator 122 is formed to surround the side of the terminal member 121 while filling the mesh shape.

In such an embodiment, coupling between the terminal member 121 and the terminal insulator 122 can be further reinforced because the terminal insulator 122 further densely fills the empty space of the terminal member 121, which has the mesh shape.

Hereinafter, suitable materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001 ≤b≤0.1); LiₐMn_{1-b}G_{b}O₂ (0.90≤a≤1.8, 0.001 ≤b≤0.1); LiₐMn₂G_{b}O₄ (0.90≤a≤1.8, 0.001 ≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminium (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

Although the present disclosure has been described above with respect to embodiments thereof, the present disclosure is not limited thereto. Various modifications and variations can be made by those skilled in the art within the present disclosure and the scope of equivalence of the appended claims.

Embodiments are set out in the following clauses.
Clause 1. An integrated terminal comprising:
   a terminal assembly comprising a terminal member configured to adjoin a sub-plate electrically connected to an electrode assembly of a secondary battery and a terminal insulator that surrounds a side of the terminal member; and
   a cap insulator extending along a through hole in a cap plate that is coupled to a case that accommodates the electrode assembly and in which the through hole into which the terminal assembly is inserted is formed,
   wherein, when the terminal assembly is inserted into the through hole, the terminal insulator and the cap insulator adjoin each other, and
   wherein a reinforced material is inserted into at least one of the terminal insulator and the cap insulator.
Clause 2. The integrated terminal according to clause 1, wherein, when the reinforced material is inserted into the cap insulator, it has a shape corresponding to a shape of the cap insulator.
Clause 3. The integrated terminal according to clause 1 or clause 2, wherein, when the reinforced material is inserted into the terminal insulator, it has a shape corresponding to a shape of the terminal insulator.
Clause 4. The integrated terminal according to any one of clauses 1 to 3, wherein the terminal member has an empty space therein, and
   wherein the terminal insulator surrounds the side of the terminal member while filling the empty space within the terminal member.
Clause 5. The integrated terminal according to clause 4, wherein the empty space within the terminal member has a mesh shape.
Clause 6. The integrated terminal according to any one of clauses 1 to 5, wherein the terminal insulator and the cap insulator are bonded together by thermal fusion or bonded together by an adhesive.
Clause 7. The integrated terminal according to any one of clauses 1 to 6, wherein the cap insulator is formed in the cap plate by insert-molding.
Clause 8. The integrated terminal according to any one of clauses 1 to 7, wherein the terminal insulator is formed in the terminal member through insert-molding.
Clause 9. A secondary battery comprising:
   an electrode assembly;
   a case accommodating the electrode assembly;
   a terminal assembly comprising:
      a terminal member adjoining a sub-plate that is electrically connected to the electrode assembly; and
      a terminal insulator surrounding a side of the terminal member;
   a cap plate coupled to the case and having a through hole into which the terminal assembly is inserted; and
   a cap insulator extending along the through hole,
   wherein, when the terminal assembly is inserted into the through hole, the terminal insulator and the cap insulator adjoin each other, and
   wherein a reinforced material is inserted into at least one of the terminal insulator and the cap insulator.
Clause 10. The secondary battery according to clause 9, wherein, when the reinforced material is inserted into the cap insulator, it has a shape corresponding to a shape of the cap insulator.
Clause 11. The secondary battery according to clause 9 or clause 10, wherein, when the reinforced material is inserted into the terminal insulator, it has a shape corresponding to a shape of the terminal insulator.
Clause 12. The secondary battery according to any one of clauses 9 to 11, wherein the terminal member has an empty space therein, and
   wherein the terminal insulator surrounds the side of the terminal member while filling the empty space within the terminal member.
Clause 13. The secondary battery according to clause 12, wherein the empty space within the terminal member has a mesh shape.
Clause 14. The secondary battery according to any one of clauses 9 to 13, wherein the terminal insulator and the cap insulator are bonded together by thermal fusion or bonded together by an adhesive.
Clause 15. The secondary battery according to any one of clauses 9 to 14, wherein the terminal assembly comprises a first terminal assembly and a second terminal assembly, and
   wherein the first terminal assembly and the second terminal assembly are in the cap plate.
Clause 16. The secondary battery according to any one of clauses 9 to 15, wherein the terminal assembly comprises a first terminal assembly and a second terminal assembly,
   wherein the first terminal assembly is in the cap plate, and
   wherein the second terminal assembly is in a cover plate opposite to the cap plate.
Clause 17. A method of manufacturing a secondary battery, the method comprising:
   manufacturing an electrode assembly;
   manufacturing a terminal assembly comprising a terminal member configured to adjoin a sub-plate that is electrically connected to the electrode assembly and a terminal insulator that surrounds a side of the terminal member;
   manufacturing a cap plate having a through hole into which the terminal assembly is inserted and which comprises a cap insulator formed along the through hole; and
   inserting the terminal assembly into the through hole so that the terminal insulator and the cap insulator adjoin each other,
   wherein the manufacturing of the terminal assembly or the manufacturing of the cap plate comprises inserting a reinforced material into the respective one of the terminal insulator or the cap insulator.
Clause 18. The method according to clause 17, wherein the manufacturing of the terminal assembly comprises:
   forming an empty space within the terminal member; and
   forming the terminal insulator to surround the side of the terminal member while filling the empty space within the terminal member.
Clause 19. The method as according to clause 18, wherein the forming of the empty space within the terminal member comprises forming the empty space within the terminal member in a mesh shape.
Clause 20. The method according to any one of clauses 17 to 19, further comprising bonding the terminal insulator and the cap insulator by thermal fusion or by an adhesive.

### DESCRIPTION OF SOME REFERENCE SYMBOLS

| | | | |
|---|---|---|---|
| 100: | secondary battery | 110: | case |
| 120: | terminal assembly | 121: | terminal member |
| 122: | terminal insulator | 130: | cap plate |
| 131: | cap insulator | 132: | reinforced material |
| 140: | sub-plate | 150: | electrode assembly |

## Claims

1. An integrated terminal comprising:
a terminal assembly comprising a terminal member configured to adjoin a sub-plate electrically connected to an electrode assembly of a secondary battery and a terminal insulator that surrounds a side of the terminal member; and
a cap insulator extending along a through hole in a cap plate that is coupled to a case that accommodates the electrode assembly and in which the through hole into which the terminal assembly is inserted is formed,
wherein, the terminal assembly is inserted into the through hole such that the terminal insulator and the cap insulator adjoin each other, and
wherein a reinforced material is inserted into at least one of the terminal insulator and the cap insulator.

2. The integrated terminal as claimed in claim 1, wherein, the reinforced material is inserted into the cap insulator and has a shape corresponding to a shape of the cap insulator.

3. The integrated terminal as claimed in claim 1 or claim 2, wherein, the reinforced material is inserted into the terminal insulator and has a shape corresponding to a shape of the terminal insulator.

4. The integrated terminal as claimed in any one of claims 1 to 3, wherein the terminal member has an empty space therein, and
wherein the terminal insulator surrounds the side of the terminal member while filling the empty space within the terminal member, optionally wherein the empty space within the terminal member has a mesh shape.

5. The integrated terminal as claimed in any one of claims 1 to 4, wherein:
(i) the terminal insulator and the cap insulator are bonded together by thermal fusion or bonded together by an adhesive; and/or
(ii) the cap insulator is formed in the cap plate by insert-molding; and/or
(iii) the terminal insulator is formed in the terminal member through insert-molding.

6. A secondary battery comprising:
an electrode assembly;
a case accommodating the electrode assembly;
a terminal assembly comprising:
a terminal member adjoining a sub-plate that is electrically connected to the electrode assembly; and
a terminal insulator surrounding a side of the terminal member;
a cap plate coupled to the case and having a through hole into which the terminal assembly is inserted; and
a cap insulator extending along the through hole,
wherein, the terminal assembly is inserted into the through hole such that the terminal insulator and the cap insulator adjoin each other, and
wherein a reinforced material is inserted into at least one of the terminal insulator and the cap insulator.

7. The secondary battery as claimed in claim 6, wherein, the reinforced material is inserted into the cap insulator and it has a shape corresponding to a shape of the cap insulator.

8. The secondary battery as claimed in claim 6 or claim 7, wherein, the reinforced material is inserted into the terminal insulator and it has a shape corresponding to a shape of the terminal insulator.

9. The secondary battery as claimed in any one of claims 6 to 8, wherein the terminal member has an empty space therein, and
wherein the terminal insulator surrounds the side of the terminal member while filling the empty space within the terminal member, optionally wherein the empty space within the terminal member has a mesh shape.

10. The secondary battery as claimed in any one of claims 6 to 9, wherein the terminal insulator and the cap insulator are bonded together by thermal fusion or bonded together by an adhesive.

11. The secondary battery as claimed in any one of claims 6 to 10, wherein the terminal assembly comprises a first terminal assembly and a second terminal assembly, and
wherein the first terminal assembly and the second terminal assembly are in the cap plate.

12. The secondary battery as claimed in any one of claims 6 to 11, wherein the terminal assembly comprises a first terminal assembly and a second terminal assembly,
wherein the first terminal assembly is in the cap plate, and
wherein the second terminal assembly is in a cover plate opposite to the cap plate.

13. A method of manufacturing a secondary battery, the method comprising:
manufacturing an electrode assembly;
manufacturing a terminal assembly comprising a terminal member configured to adjoin a sub-plate that is electrically connected to the electrode assembly and a terminal insulator that surrounds a side of the terminal member;
manufacturing a cap plate having a through hole into which the terminal assembly is inserted and which comprises a cap insulator formed along the through hole; and
inserting the terminal assembly into the through hole so that the terminal insulator and the cap insulator adjoin each other,
wherein the manufacturing of the terminal assembly or the manufacturing of the cap plate comprises inserting a reinforced material into the respective one of the terminal insulator or the cap insulator.

14. The method as claimed in claim 13, wherein the manufacturing of the terminal assembly comprises:
forming an empty space within the terminal member; and
forming the terminal insulator to surround the side of the terminal member while filling the empty space within the terminal member, optionally wherein the forming of the empty space within the terminal member comprises forming the empty space within the terminal member in a mesh shape.

15. The method as claimed in claim 13 or claim 14, further comprising bonding the terminal insulator and the cap insulator by thermal fusion or by an adhesive.
